(19) Europäisches Patentamt
European Patent Office
Office européen des brevets

(11) Publication number: 0 343 897 A1

# (12) EUROPEAN PATENT APPLICATION

(21) Application number: 89305149.0

(51) Int. Cl.[4]: C09D 5/14 , C08F 246/00

(22) Date of filing: 22.05.89

(30) Priority: 23.05.88 GB 8812172
19.05.89 PCT/GB89/00548

(43) Date of publication of application:
29.11.89 Bulletin 89/48

(84) Designated Contracting States:
DE ES FR GB GR IT NL SE

(71) Applicant: COURTAULDS COATINGS LIMITED
18 Hanover Square
London W1A 2BB(GB)

(72) Inventor: Lines, Robert
14 Parklands
Ponteland Northumberland(GB)
Inventor: Andrews, Adrian Ferguson
22 Shaws Park Hexham
Northumberland(GB)

(74) Representative: Hale, Stephen Geoffrey et al
J.Y. & G.W. Johnson Furnival House 14/18
High Holborn
London WC1V 6DE(GB)

## (54) Marine anti-fouling paint.

(57) A film-forming binder for an antifouling marine paint is a seawater-insoluble hydrolysable polymer of the formula $Z(-O-X)_n$, where Z is the residue of a hydroxy-functional polymer $Z(-OH)_n$ which is soluble or dispersible in seawater in its hydrolysable state, n is an integer greater than one and each X independently is a moiety such that the -O-X group hydrolyses in seawater to form an -OH group. The groups -O-X can be sulphonate ester, triorganosilyl ether, sulphate ester, sulphite ester, sulphinate ester, phosphate ester, phosphonate ester, phosphinate ester or activated carboxylate ester groups. An anti-fouling marine paint comprises such a film-forming binder and either a pigment which is a marine biocide or a pigment and a separate marine biocide, and may be obtained by mixing the binder with the other ingredient(s).

EP 0 343 897 A1

## MARINE ANTI-FOULING PAINT

This invention is concerned with anti-fouling marine paints used on surfaces likely to come into contact with aquatic fouling organisms such as algae, seaweed and barnacles, for example on ships or boats, or on the out-falls for cooling water from power stations. More particularly, it is concerned with improvements in binders for such paints.

The most successful anti-fouling paints in recent years have been self-polishing anti-fouling paints which used binders which are linear polymers containing pendent side groups which are liberated from the polymer on reaction with seawater, the residual polymer being sufficiently dispersible or soluble in seawater to be swept away from the paint surface, exposing a fresh layer of the binder able to undergo a similar reaction with seawater. Such paints are described for example in British Patent 1457590. The gradual thinning of the paint film controls the release of a biocide active against fouling and present either as a pigment in the paint or as a leaving group. The well-known benefits of such self-polishing paints are that the paint film tends to at least retain its initial smoothness and may even become smoother from the action of relatively moving water and that the biocide contained in the paint tends to be delivered from the surface at a uniform or constant rate.

The only commercially significant self-polishing paints employ binders which are copolymers of a triorganotin ester of an olefinically unsaturated carboxylic acid. The triorganotin provides some of the biocidal action of the paints and the triorganotin ester readily undergoes the hydrolysis on which the shelf-polishing action is dependent. The biocidal activity can be augmented by other anti-fouling substances dispersed or dissolved in the paint film. There may be advantages in a self-polishing anti-fouling paint which does not rely on the release of triorganotin groups, both for cost reasons and because the powerful biocidal effects of triorganotin may not be desired. There has been concern about the environmental effect of triorganotin biocides released from yachts in particular.

There have been many proposals for a group which substitutes for the triorganotin in forming an easily hydrolysable ester with a polycarboxylic acid polymer, but a commercial self-polishing paint in which the triorganotin moiety has been replaced is still awaited. International Patent Publication WO 84/02915 suggests a wide range of such groups. European Patent Application 232006 suggests a water-erodible polymer comprising one or more hydrolysable sulphonate or sulphate ester groups which in an aqueous environment will generate by hydrolysis corresponding polymer-bound acid groups.

We have found new binders having a rate of hydrolysis suitable for use in self-polishing anti-fouling paints.

An anti-fouling marine paint according to the invention comprises either a pigment which is a marine biocide or a pigment and a separate marine biocide, and a film-forming binder, and is characterised in that the binder is a seawater-insoluble hydrolysable polymer of the formula $Z(\text{-O-X})_n$, where Z is the residue of a hydroxy-functional polymer $Z(\text{-OH})_n$ which is soluble or dispersible in seawater in its hydrolysed state, n is an integer greater than one and each X independently is a moiety such that the -O-X group hydrolyses in seawater to form an -OH group.

By "soluble or dispersible in its hydrolysed state" we mean that the polymer is soluble or dispersible as a colloidal dispersion when substantially all of the groups -O-X have been converted to -OH groups. The polymer will generally become soluble or dispersible in seawater when some but not all of its -O-X groups have been hydrolysed to -OH groups and some remain as -O-X groups. When sufficient free hydroxy groups have been generated by hydrolysis, the polymer is gradually dissolved or dispersed from the surface of a ship's or boat's hull onto which it has been coated.

Examples of groups -O-X are sulphonate ester groups of the formula

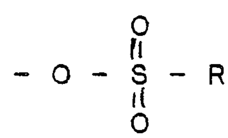

where R is an organic group, e.g. an alkyl or aryl group of up to 8 carbon atoms, linked to the sulphur atom by a carbon-sulphur bond,
sulphate ester groups of the formula

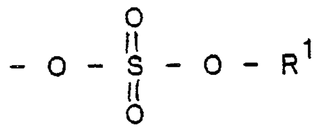

where $R^1$ is an organic group, e.g. an alkyl group of up to 8 carbon atoms, linked to the oxygen atom by a carbon-oxygen bond,
sulphite ester groups of the formula

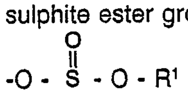

where $R^1$ has the above meaning,
sulphonate ester groups of the formula

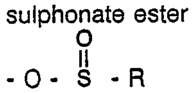

where R has the above meaning,
phosphate ester groups of the formula

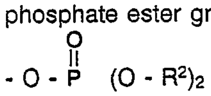

where each $R^2$ independently is an organic group, e.g. an alkyl group of up to 8 carbon atoms, linked to the oxygen atom by a carbon-oxygen bond,
phosphate ester groups of the formula

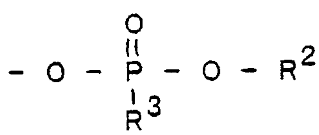

where $R^2$ has the above meaning and $R^3$ is an organic group, e.g. an alkyl or aryl group of up to 8 carbon atoms, linked to the phosphorus atom by a carbon-phosphorus bond, phosphinate ester groups of the formula

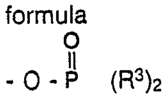

where each $R^3$ independently has the above meaning,
silyl ether groups of the formula $-OSiR^4{}_3$, where each $R^4$ independently is an organic group, e.g. an alkyl or aryl group of up to 8 carbon atoms, linked to the silicon atom by a carbon-silicon bond,
and activated carboxylate ester groups of the formula

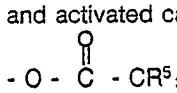

where at least one of the groups $R^5$ is an electron-withdrawing polar group, any other groups $R^5$ being hydrogen or an organic group, e.g. of up to 8 carbon atoms. Examples of suitable electron-withdrawing polar groups are halogen atoms or cyano, thiocyanate, sulfone, aldehyde or ketone groups. For example the group -O-X can be $-OOCCCl_3$, $-OOCCF_3$, $-OOCCHCl_2$, $-OOCCH_2Cl$ or $-OOCCH_2CN$. Generally, the hydrolysable polymer has from 10 to 10,000 or more groups -O-X and a molecular weight of from 2,000 to 500,000 or more.

The hydroxy-functional polymer is generally a polymer having hydroxy groups each bonded to a carbon atom in the polymer, which is otherwise bonded only to carbon and/or hydrogen atoms. The hydroxy-functional polymer is preferably a linear polymer having a hydroxyl value of at least 0.1 meq/g, more preferably at least 0.5 meq/g, and is most preferably an addition polymer. A preferred hydroxy-functional polymer is polyvinyl alcohol. The polyvinyl alcohol preferably has a molecular weight of 2,000 to 500,000, more preferably 5,000 to 50,000. Polyvinyl alcohol is generally formed by saponification of polyvinyl acetate and preferably has at least 50 mole per cent, for example 60 to 98 mole per cent, of the acetate groups of the polyvinyl acetate converted to hydroxyl groups. An alternative hydroxy-functional polymer is a polymer of a hydrolysable acrylic ester monomer such as hydroxyethyl acrylate or hydroxyethyl methacrylate.

The hydroxy-functional polymer can alternatively be a hydroxy-functional polyester or polyether. Hydroxy-functional polyesters can be produced by the reaction of a dicarboxylic acid or an anhydride thereof, for example terephthalic, isophthalic, adipic or sebacic acid and/or phthalic anhydride, with an excess of a diol such as ethylene glycol, propylene glycol, butane-1,4-diol or neopentyl glycol, and/or an

ether glycol. To enhance water solubility, the polyester preferably contains units derived from an ether glycol such as diethylene glycol, triethylene glycol or dipropylene glycol, or it can be a block copolymer containing polyether blocks derived from polyethylene glycol or poly(tetramethylene ether) glycol. The polyester may also contain a small proportion of acid groups which are insufficient to confer water-solubility when the hydroxy groups of the polyester are reacted to form -O-X groups but which promote water-solubility of the polyester containing free hydroxy groups.

A suitable hydroxy-functional polyether can for example be formed by reaction of an amine-tipped polyether with an epoxide to form bis(beta-hydroxy) amine groups.

In the sulphonate ester groups $RSO_3$- the group R is preferably an alkyl group such as methyl, ethyl, propyl, isopropyl, butyl or hexyl but it can alternatively be an aryl group, for example phenyl or p-tolyl. The group R is preferably an unsubstituted hydrocarbon group that can optionally be substituted by an inert substituent such as an alkoxy group or a halogen atom.

In the sulphate, sulphite, phosphate and phosphonate ester groups the group $R^1$ or $R^2$ is preferably chosen so that the -O-$R^1$ or -O-$R^2$ bond is less labile than the linkage of the -O-X group to the polymer, lest an acid sulphate, sulphite, phosphate or phosphonate group is developed on the polymer residue. Such acid groups will lead to a water-soluble polymer more quickly than hydroxy groups and hence to unexpectedly rapid dissolution of the paint. In the phosphate and phosphonate ester groups, alkyl groups $R^2$ form the most stable ester linkages. In the sulphate and sulphite ester groups, the groups $R^1$ are preferably branched alkyl groups, for example t-butyl, isopropyl or neopentyl groups, for maximum stability of the -O-$R^1$ linkage.

The groups $R^3$ in the phosphonate or phosphinate ester groups can be any alkyl, aryl or aralkyl group, substituted or unsubstituted.

The hydrolysable polymer can be prepared by free radical polymerisation, optionally with one or more comonomers, of a monomer containing the -O-X group, for example vinyl p-toluenesulphonate. This monomer can be prepared by reaction of potassium tert-butoxide with ethylene glycol di(p-toluenesulphonate) in boiling tert-butanol. An alternative sulphonate monomer is 2-methacryloxyethyl p-toluenesulphonate, which can be prepared from hydroxyethyl methacrylate and p-toluenesulphonyl chloride in a solvent such as methylene chloride in the presence of a base such as triethylamine. The hydrolysable addition polymer can alternatively be prepared by reaction of a vinyl carboxylate polymer, for example a vinyl acetate or vinyl butyrate polymer, with a trialkyltin methoxide such as tributyltin methoxide, followed by an acid chloride such as methanesulphonyl chloride or p-toluenesulphonyl chloride, according to European Patent Application 217535. The vinyl carboxylate polymer is preferably polyvinyl acetate. At least 30% of the acetate groups, preferably 50 to 70%, are converted to $RSO_3$- groups. Alternatively, a hydroxy-functional polymer such as polyvinyl alcohol or poly (hydroxyethyl acrylate) can be sulphonated by treatment with an alkyl or aryl sulphonyl chloride in pyridine or in an organic solvent in the presence of a base.

A polymer containing sulphate, sulphite, phosphate, phosphonate or phosphinate ester groups can be prepared by the reaction of polyvinyl acetate with an alkyl, preferably branched alkyl, chlorosulphate

$$Cl - \underset{\overset{\|}{O}}{\overset{\overset{O}{\|}}{S}} - O - R^1 ,$$

an alkyl, preferably branched alkyl, chlorosulphite $Cl - \overset{\overset{O}{\|}}{S} - O - R^1$, an alkyl chlorophosphate $Cl - \overset{\overset{O}{\|}}{P} (O - R^2)_2$, an alkyl chlorophosphonate

$$Cl - \underset{\overset{\backslash}{R^3}}{\overset{\overset{O}{\|}}{P}} - O - R^2,$$

or a phosphinyl chloride $Cl - \overset{\overset{O}{\|}}{P} (R^3)_2$, respectively, $R^1$, $R^2$ and $R^3$ having the above meanings. Alternatively, a hydroxy-functional monomer such as hydroxyethyl methacrylate can be reacted with an alkyl chlorosulphate, an alkyl

chlorosulphite, an alkyl chlorophosphate, an alkyl chlorophosphonate or a phosphinyl chloride and the resulting monomer can be polymerised by free radical polymerisation. The reaction with the acid chloro compound is carried out in the presence of a base, for example triethylamine or pyridine.

A polymer containing activated carboxylate ester groups can be prepared by reacting a hydroxy-functional polymer with an acyl chloride of the formula $R^5{}_3CCOCl$ in the presence of a tertiary amine.

The groups $R^4$ in the triorganosilyl moiety $-SiR^4{}_3$ are preferably alkyl groups such as methyl, ethyl, propyl, isopropyl, butyl or hexyl but can alternatively be aryl, for example phenyl. The group $R^4$ is preferably an unsubstituted hydrocarbon group but can optionally be substituted by an inert substituent such as an alkoxy group or a halogen atom. The $-O-SiR^4{}_3$ silyl ether groups hydrolyse sufficiently rapidly in seawater but less rapidly than the silyl ester groups described in US Patent 4593055.

The hydrolysable polymer can be prepared by free radical polymerisation, optionally with one or more comonomers, of an unsaturated monomer containing an $-OSiR_3$ group or by reacting a seawater-soluble or -dispersible hydroxy-functional polymer, for example polyvinyl alcohol or poly(hydroxyethyl acrylate), with a triorganosilylating agent, for example trimethylsilyl chloride, tert-butyl dimethyl silyl chloride or phenyl dimethyl silyl chloride. The reaction can be carried out in an organic solvent such as dimethylformamide in the presence of a base such as trimethylamine or pyridine at 0 to 20°C. The hydroxy-functional polymer can alternatively be reacted with hexamethyldisilazane $(CH_3)_3SiNSi(CH_3)_3$ or bis (trimethylsilyl) urea $(CH_3)_3Si-NH-CO-NH-Si(CH_3)_3$ in an organic solvent such as xylene or methyl isobutyl ketone. Alternatively, a hydroxy-functional monomer such as hydroxyethyl methacrylate can be reacted with a triorganosilylating agent such as hexamethyldisilazine or bis(trimethylsilyl) urea to form a silyl ether monomer such as 2-(trimethylsiloxy)-ethyl methacrylate. This can be polymerised, optionally with one or more inert comonomers, for example acrylic ester comonomers such as methyl methacrylate, methyl acrylate, ethyl acrylate, butyl acrylate or methoxyethyl acrylate, by free radical polymerisation in an organic solvent such as xylene or methyl isobutyl ketone.

Hydrolysable polymers containing groups -O-X of the formula

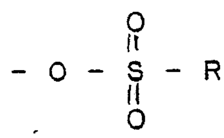 .

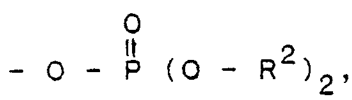 , 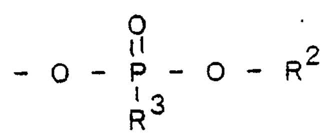 ,

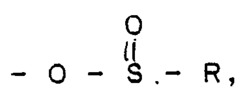 , 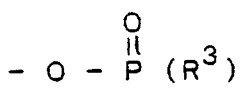 , or $-OSiR^4{}_3$

have not previously been described. The invention includes seawater-insoluble hydrolysable polymers containing these groups, especially as pendent groups bonded to a carbon atom in an addition polymer, and processes for their preparation.

To form the paint, the hydrolysable polymer binder is mixed with the pigment or pigments used in the paint and with the marine biocide if this is different from the pigment(s). Conventional blending procedures can be used. The pigment generally has a solubility in seawater of below 10 parts per million by weight and is preferably a sparingly soluble pigment having a solubility in seawater of from 0.5 to 10 parts per million, by weight, for example cuprous oxide, cuprous thiocyanate, zinc oxide, zinc chromate, zinc ethylene bis-(dithiocarbamate), zinc dimethyl dithiocarbamate or zinc diethyl dithiocarbamate. These sparingly soluble copper and zinc compounds are generally marine biocides. These sparingly soluble pigments produce water-soluble metal compounds on reaction with seawater so that the pigment particles do not survive at the paint surface; this aids the smooth dissolution of the paint in relatively moving seawater. Mixtures of sparingly soluble pigments can be used, for example cuprous oxide, cuprous thiocyanate or zinc ethylene bis(dithiocarbamate), which are the most effective biocidal pigments, can be mixed with zinc oxide, which dissolves slightly more rapidly in seawater and is more effective at inducing the smooth dissolution of the paint.

The paint composition can additionally or alternatively contain a pigment which is not reactive with seawater and may be highly insoluble in seawater (solubility below 0.5 ppm by weight) such as titanium dioxide or ferric oxide. Such highly insoluble pigments are preferably used in proportions up to 40 per cent by weight of the total pigment component of the paint, most preferably less than 20 percent by weight.

The proportion of pigment to polymer binder is preferably such as to give a pigment volume concentration which is above 25 per cent in the dry paint film but below the critical pigment volume concentration; most preferably the pigment volume concentration is from 35-50 per cent.

The biocidal effect of the sparingly seawater-soluble pigments, particularly cuprous oxide, cuprous thiocyanate and zinc ethylene bis(dithiocarbamate), may be sufficient so that the paint needs no further biocide.

For encountering severe fouling the paint may contain an added biocide, e.g. in an amount up to 50 per cent by weight of the pigment. Triorganotin salts and oxides such as triphenyltin fluoride, tributyltin fluoride, tributyltin dibromosuccinate, triphenyltin chloride, triphenyltin hydroxide and tributyltin oxide are effective marine biocides and can be used in paints according to the invention. A paint according to the invention comprising a triorganotin salt (up to 25 per cent by volume of the pigment) may have anti-fouling and smoothing properties equal to a triorganotin copolymer paint of much higher triorganotin content. In most cases it will be desired to avoid completely the release of triorganotin ions. Examples of other biocides effective as marine anti-fouling agents are dithiocarbamate derivatives such as cupric ethylene bis-(dithiocarbamate) or tetramethyl thiuram disulphide, methylene bis(thiourea), 4-butyl catechol, captan, tetrachloroisophthalonitrile, 1-methylthio-3-(t-butylamino)-5-(cyclopropylamino)-s-triazine, or a halogenated isothiazolone such as 4,5-dichloro-2-octyl-3-isothiazolone.

The invention is illustrated by the following Examples.

## Example 1

### a) Preparation of 2-methacryloxyethyl p-toluenesulphonate

p-Toluenesulphonyl chloride (256g) was dissolved in $CH_2Cl_2$ (400ml) and the solution was added dropwise to a solution of 2-hydroxyethyl methacrylate (175g) and triethylamine (136g) in $CH_2Cl_2$ (600ml). The mixture was stirred under a nitrogen atmosphere and cooled by an ice bath throughout the addition period. A clear solution was produced. Stirring was continued for several hours. The white precipitate formed was removed by filtration and the filtrate washed with dilute HCl, dilute $NaHCO_3$ solution and water. The resulting cloudy yellow solution was dried over $MgSO_4$ and solvent was removed by rotary evaporation.

### b) Polymer Preparation

190g 2-methacryloxyethyl p-toluenesulphonate prepared as descirbed above was polymerised as a 40% by weight solution in butan-2-one with 1% by weight (based on monomer) azobisisobutyronitrile as catalyst at 70°C for 5 hours.

The polymer solution produced could be mixed with cuprous oxide to form a marine anti-fouling paint.

## Example 2

Methyl methacrylate (133.8g), n-butyl acrylate (171.3g) and butan-2-one (MEK) (230g) were placed in a flask and heated to 70°C whilst purging with nitrogen. A solution of 2-methacryloxyethyl p-toluenesulphonate (190g) in MEK (230g) at room temperature was also purged with nitrogen for one hour. Azobisisobutyronitrile initiator (2.475g) was dissolved in the methacryloxyethyl p-toluenesulphonate solution, and the same quantity was added directly to the flask contents. The methacryloxymethyl p-toluenesulphonate solution was added dropwise, over a period of 115 minutes, to the stirred methyl methacrylate/butyl acrylate solution, maintaining a slow nitrogen bleed throughout the reaction. During polymerisation, the solution was diluted to 40% solids to ease stirring. Heating was continued for 3 hours after the end of addition; the flask was removed from the water bath and the contents allowed to cool under nitrogen.

The polymer solution was filtered and cast as a film using a cube applicator. It dried to a hard film. On immersion in seawater, the film showed sustained release of p-toluenesulphonate into the seawater, indicating that hydrolysis was taking place.

The polymer solution could be mixed with cuprous oxide to form an anti-fouling paint.

## Example 3

### a) Preparation of 2-(trimethylsiloxy) ethyl methacrylate

200 ml toluene containing 73ml hydroxyethyl methacrylate and 23ml hexamethyl disilazane was heated to reflux. 3 to 4 drops $(CH_3)_3SiCl$ were added to the refluxing solution. A white precipitate was seen. Ammonia was evolved. After one hour of refluxing at 116°C the precipitate had disappeared and a clear solution remained. A 25ml sample taken from the solution was examined by NMR and showed substantially complete conversion of hydroxyl groups to trimethylsilyl ether groups. The solvent was evaporated leaving 37.5g product.

### b) Polymer preparation

2-(Trimethylsiloxy) ethyl methacrylate prepared as described above was polymerised as a 40% solution in a mixture of equal volumes of xylene and methyl isobutyl ketone at 70°C for 5 hours using 1%, by weight of monomer, azobisisobutyronitrile as catalyst. The polymer solution produced could be mixed with cuprous oxide to form an anti-fouling paint.

## Example 4

40.4g 2-(trimethylsiloxy) ethyl methacrylate, 40.0g methyl methacrylate and 51.2g butyl acrylate were copolymerised in butan-2-one using 1% azobisisobutyronitrile catalyst by the procedure of Example 2 to produce a polymer solution suitable for use as a binder of an anti-fouling paint in admixture with cuprous oxide.

## Claims

1. An anti-fouling marine paint comprising either a pigment which is a marine biocide or a pigment and a separate marine biocide, and a film-forming binder, characterised in that the binder is a seawater-insoluble hydrolysable polymer of the formula $Z(-O-X)_n$ where Z is the residue of a hydroxy-functional polymer $Z(-OH)_n$ which is soluble or dispersible in seawater in its hydrolysed state, n is an integer greater than one and each X independently is a moiety such that the -O-X group hydrolyses in seawater to form an -OH group.

2. A paint according to claim 1, characterised in that the polymer includes groups -O-X which are sulphonate ester groups of the formula

$$O - \overset{\overset{\displaystyle O}{\|}}{\underset{\underset{\displaystyle O}{\|}}{S}} - R$$

where R is an alkyl or aryl group of up to 8 carbon atoms.

3. A paint according to claim 1, characterised in that the polymer includes groups -O-X which are silyl ether groups of the formula $-OSi(R^4)_3$ where each $R^4$ independently is an alkyl or aryl group of up to 8 carbon atoms.

4. A paint according to claim 1, characterised in that the polymer includes groups -O-X which are phosphate ester groups of the formula

$$-O-\overset{\displaystyle O}{\overset{\|}{P}}\ (O-R^2)_2$$

where each $R_2$ independently is an alkyl group having up to 8 carbon atoms, or phosphonate ester groups of the formula

$$-O-\underset{\displaystyle R^3}{\underset{|}{\overset{\displaystyle O}{\overset{\|}{P}}}}-O-R^2$$

where $R^2$ has the above meaning and $R^3$ is an alkyl or aryl group of up to 8 carbon atoms, or phosphinate ester groups of the formula

$$-O-\overset{\displaystyle O}{\overset{\|}{P}}\ (R^3)_2$$

where each $R^3$ independently has the above meaning, or sulphate ester groups of the formula

$$-O-\underset{\displaystyle O}{\underset{\|}{\overset{\displaystyle O}{\overset{\|}{S}}}}-O-R^1$$

where $R^1$ is a branched alkyl group of up to 8 carbon atoms, or sulphite ester groups of the formula

$$-O-\overset{\displaystyle O}{\overset{\|}{S}}-O-R^1$$

where $R^1$ has the above meaning, or sulphinate ester groups of the formula

$$-O-\overset{\displaystyle O}{\overset{\|}{S}}-R$$

where R is an alkyl or aryl group of up to 8 carbon atoms, or activated carboxylate ester groups of the formula

$$-O-\overset{\displaystyle O}{\overset{\|}{C}}-C(R^5)_3$$

where at least one of the groups $R^5$ is an electron-withdrawing polar group, any other groups $R^5$ being hydrogen or an organic group of up to 8 carbon atoms.

5. A paint according to any of claims 1 to 4, characterised in that the hydroxy-functional polymer $Z(-OH)_n$ is polyvinyl alcohol.

6. A paint according to any of claims 1 to 4, characterised in that the hydroxy-functional polymer $Z(-OH)_n$ is a polymer of hydroxyethyl acrylate or hydroxyethyl methacrylate.

7. A paint according to any of claims 1 to 4, characterised in that the hydroxy-functional polymer $Z(-OH)_n$ is a hydroxy-functional polyester or polyether.

8. A seawater-insoluble hydrolysable polymer of the formula $Z(-O-X)_n$ where Z is the residue of a hydroxy-functional polymer $Z(-OH)_n$ which is soluble or dispersible in seawater in its hydrolysed state, n is an integer greater than one and each X independently is a moiety such that the -O-X group hydrolyses in seawater to form an -OH group, in which the group O-X are selected from sulphonate ester groups of the formula

$$-O-\underset{\displaystyle O}{\underset{\|}{\overset{\displaystyle O}{\overset{\|}{S}}}}-R$$

where R is an alkyl or aryl group of up to 8 carbon atoms, phosphate ester groups of the formula

$-O-\overset{O}{\overset{\|}{P}}(O-R^2)_2$

where each $R^2$ independently is an alkyl group of up to 8 carbon atoms, phosphate ester groups of the formula

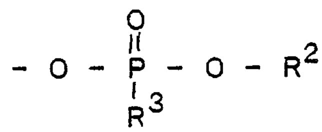

where $R^2$ has the above meaning and $R^3$ is an alkyl or aryl group of up to 8 carbon atoms, sulphinate ester groups of the formula

$-O-\overset{O}{\overset{\|}{S}}-R$

where R has the above meaning, phosphinate ester groups of the formula

$-O-\overset{O}{\overset{\|}{P}}(R^3)_2$

where $R^3$ has the above meaning, and silyl ether groups of the formula $-OSi(R^4)_3$ where each $R^4$ independently is an alkyl or aryl group of up to 8 carbon atoms.

9. A seawater-insoluble hydrolysable polymer containing groups of the formula -O-X as pendent groups bonded to a carbon group in an addition polymer, where the groups -O-X are sulphonate ester groups of the formula

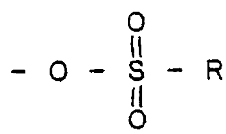

where R is an alkyl or aryl group of up to 8 carbon atoms, phosphate ester groups of the formula

$-O-\overset{O}{\overset{\|}{P}}(O-R^2)_2$

where each $R^2$ independently is an alkyl group of up to 8 carbon atoms, phosphonate ester groups of the formula

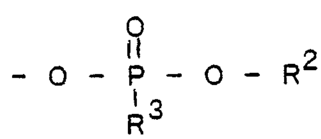

where $R^2$ has the above meaning and $R^3$ is an alkyl or aryl group of up to 8 carbon atoms, sulphinate ester groups of the formula

$-O-\overset{O}{\overset{\|}{S}}-R$

where R has the above meaning, phosphinate ester groups of the formula

$-O-\overset{O}{\overset{\|}{P}}(R^3)_2$

where each $R^3$ independently has the above meaning, or silyl ether groups of the formula $-OSi(R^4)_3$ where each $R^4$ independently represents an alkyl or aryl group of up to 8 carbon atoms.

10. A polymer according to claim 8 or 9, in which the groups -O-X are silyl ether groups.

European Patent Office

# EUROPEAN SEARCH REPORT

Application Number

EP 89 30 5149

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| D,X | EP-A-0 232 006 (ICI)<br>* Claims 1-7,37-41; page 10, lines 2-18 * | 1,4 | C 09 D 5/14<br>C 08 F 246/00 |
| X | PATENT ABSTRACTS OF JAPAN, vol. 7, no. 69 (C-158)[1214], 23rd March 1983; & JP-A-58 2362 (NIPPON PAINT K.K.) 07-01-1983<br>* Abstract * | 1,4,6 | |
| A | EP-A-0 204 456 (NIPPON PAINT) | | |
| A,D | EP-A-0 217 535 (RAYCHEM) | | |

TECHNICAL FIELDS SEARCHED (Int. Cl.4)

C 09 D
C 08 F

The present search report has been drawn up for all claims

| Place of search | Date of completion of the search | Examiner |
|---|---|---|
| THE HAGUE | 12-09-1989 | GIRARD Y.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)